# EUROPÄISCHE PATENTSCHRIFT

(11) **EP 3 521 003 B1**
(45) Veröffentlichungstag und Bekanntmachung des Hinweises auf die Patenterteilung: **22.04.2020**
(21) Anmeldenummer: 18155329.8
(22) Anmeldetag: 06.02.2018
(51) Int. Cl.: B29C 71/04, B29C 71/00, B29C 64/35, B08B 3/10, B29C 35/08

(54) **NACHBEARBEITUNGSANORDNUNG FÜR GENERATIV DURCH PHOTOPOLYMERISATION AUFGEBAUTE FORMKÖRPER**
POST-PROCESSING ARRANGEMENT FOR MOULDED ARTICLES MANUFACTURED IN A GENERATIVE MANNER BY MEANS OF PHOTOPOLYMERISATION
DISPOSITIF DE TRAITEMENT ULTÉRIEUR POUR CORPS MOULÉS FABRIQUÉS DE MANIÈRE ADDITIVE PAR PHOTOPOLYMÉRISATION

(43) Veröffentlichungstag der Anmeldung: 07.08.2019
(73) Patentinhaber: Ivoclar Vivadent AG, 9494 Schaan (LI)
(72) Erfinder: John, Hendrik, CH-9470 Buchs SG (CH)
(74) Vertreter: Uexküll & Stolberg

(56) Entgegenhaltungen:
- WO-A2-2009/140449
- US-A- 5 248 456

## Beschreibung

Die vorliegende Erfindung betrifft eine Nachbearbeitungsanordnung für generativ durch Photopolymerisation aufgebaute Formkörper, die eine Reinigungsstation zur Reinigung des Formkörpers und eine Nachvergütungsstation zur Nachbelichtung des Formkörpers aufweist.

Es gibt inzwischen viele Verfahrensweisen zum Aufbau eines Formkörpers aus flüssigem, photopolymerisierbarem Material unter Anwendung einer stereolithographiebasierten generativen Fertigung (Rapid Prototyping) durch ortselektive Belichtung aufeinanderfolgender Schichten. Dabei wird an einer Bauplattform eine Schicht aus viskosem, flüssigem Material definiert und die Schicht von einer Belichtungseinheit in einem Belichtungsgebiet mit für die jeweilige Schicht vorgegebener Kontur durch ortsselektives Belichten polymerisiert. Danach wird an der polymerisierten Schicht eine weitere Schicht aus photopolymerisierbarem Material definiert und diese zuletzt definierte Schicht mit einer für diese zuletzt definierte Schicht vorgegebener Kontur durch Belichten polymerisiert. Die beiden zuletzt genannten Schritte werden sooft wiederholt, bis durch die Abfolge von ausgehärteten Schichten mit schichtweise vorgegebenen Konturen ein Formkörper mit vorgegebener Form gebildet ist.

Ein solches Verfahren zum Aufbau eines Formkörpers ist zum Beispiel aus WO 2010/045950 A1 bekannt, die sich insbesondere auf den Aufbau von Dentalrestaurationen aus flüssigen, photopolymerisierbaren Materialien bezieht. Bei dem bekannten Verfahren wird eine Bauplattform vertikal beweglich über einem Wannenboden gehalten, der lichtdurchlässig ausgebildet ist. Unterhalb des Wannenbodens befindet sich eine Belichtungseinheit. Die Bauplattform wird zunächst in das photopolymerisierbare Material soweit abgesenkt, bis zwischen der Bauplattform und dem Wannenboden nur noch eine Schicht mit der gewünschten Schichtdicke aus photopolymerisierbarem Material verbleibt. Anschließend wird diese Schicht mit einer vorgegebenen Kontur durch die Belichtungseinheit belichtet und dadurch ausgehärtet. Nach Anheben der Bauplattform wird photopolymerisierbares Material aus der Umgebung nachgeführt und die Bauplattform erneut abgesenkt, wobei die Absenkung so gesteuert wird, dass der Abstand zwischen der zuletzt gebildeten Schicht und dem Wannenboden eine Schicht mit der gewünschten Dicke definiert. Danach werden die letzten Schritte so oft wiederholt, bis durch die aufeinanderfolgende Aushärtung von Schichten mit jeweils vorgegebener Kontur ein Formkörper mit der gewünschten Form hergestellt ist.

Nach der Polymerisierung der letzten Schicht wird der Formkörper aus der Bauvorrichtung entnommen, indem die Bauplattform aus einer Halterung in der Bauvorrichtung gelöst und mit dem daran haftenden Formkörper entnommen wird. In dieser Phase ist der Formkörper noch feucht, d.h. von flüssigem, photopolymerisierbarem Material benetzt. Ferner kann es noch Bereiche im Formkörper mit nicht vollständig auspolymerisiertem Material geben. Daher wird der entnommene Formkörper einer Nachbearbeitung zur Reinigung und zur Nachvergütung durch Nachbelichtung unterzogen. Dazu wird im Stand der Technik beispielsweise folgendermaßen vorgegangen, wobei der Oberbegriff von Anspruch 1 auf der dabei verwendeten Nachbearbeitungsanordnung beruht. Die Bauplattform mit dem daran hängenden Formkörper wird in eine Halterahmen gesteckt und dieser dann in eine erste Reinigungswanne mit Isopropanol zur Grobreinigung getaucht. Das Isopropanolbad wird durch Magnetrührer in Bewegung gesetzt, um noch anhaftendes, unpolymerisiertes Material von der Oberfläche des Formkörpers zu lösen. Nach dieser Grobreinigung wird der Halterahmen aus der Reinigungswanne entnommen und in eine zweite, separate Reinigungswanne zur Feinreinigung getaucht. Auch hier wird die Reinigung durch Magnetrührer unterstützt. Alternativ wird als Aktuator auch Ultraschall eingesetzt, was aber im direkten Umgang mit Lösungsmitteln aus Gründen der Arbeitssicherheit sehr umstritten ist und nicht empfohlen wird. Anschließend wird der Halterahmen aus dem zweiten Reinigungsbecken gehoben, und darauf folgend wird der Formkörper mit Druckluft abgeblasen, um das Isopropanol mit gelöstem Photopolymer zu entfernen und den Formkörper zu trocknen. Schließlich wird der Halterahmen mit dem daran an der Bauplattform hängenden Formkörper in ein separates Nachvergütungsgerät gestellt und dort einer Nachbelichtung unterzogen, um noch unpolymerisierte Reste im Formkörper zu polymerisieren. Dabei erfolgt die Handhabung der in dem Halterahmen gehaltenen Bauplattform mit dem Formkörper sowie deren Transport in und zwischen den Reinigungswannen und zu dem Nachvergütungsgerät manuell. Auch die Einstellung der Magnetrührer, die Kontrolle der Reinigungsdauern in den beiden Reinigungswannen sowie die Einstellung der Betriebsparameter des Nachvergütungsgerätes erfolgt ebenfalls manuell durch eine Bedienungsperson. Dabei muss die Bedienungsperson sich mit Handschuhen schützen, um nicht mit dem feuchten Formkörper und den Reinigungsflüssigkeiten in Berührung zu kommen. Andere Systemanbieter empfehlen, die Formkörper vor der Reinigung und Nachbelichtung von der Bauplattform zu entfernen, wobei die Formkörper selbst berührt/angefasst werden müssen und vereinzelt gehandhabt werden. Diese zuvor beschriebene Nachbearbeitungsanordnung benötigt einerseits viel Platz (zwei nebeneinander stehende Reinigungswannen und ein weiteres daneben stehendes Nachverarbeitungsgerät), und ist andererseits personalintensiv, da die Handhabung und der Transport des in dem Halterahmen gehaltenen Formkörpers manuell durch Personal erfolgen muss, das auch die Betriebsparameter beim Reinigen und bei der Nachvergütung manuell einstellen muss. Daher ist die Nachbearbeitung in einer solchen Nachbearbeitungsanordnung personalintensiv und fehleranfällig, da es zu fehlerhaften Einstellungen beim Reinigen und bei der Nachvergütung kommen kann.

Daneben gibt es auch bereits eine Nachbearbeitungsanordnung, bei der die beiden Reinigungswannen durch einen Rahmen nebeneinander liegend gehalten sind, so dass die beiden Reinigungswannen als Einheit gehandhabt werden können. Das Problem des hohen Platzbedarfs ist dadurch allerdings nicht gemildert, denn die beiden Wannen sind nebeneinander liegend angeordnet und nehmen insofern eine große Fläche ein. Außerdem nimmt auch das Nachvergütungsgerät als separates Gerät weiteren Platz ein. Auch die Probleme der Personalintensität der Durchführungsschritte der Nachbearbeitung und die Fehleranfälligkeit bei der Auswahl und Einstellung der richtigen Durchführungsschritte werden dadurch nicht angegangen.

Aus US 2016/0107392 A1 ist eine Nachbearbeitungsanordnung für durch 3D-Drucker erzeugte Formkörper bekannt. In der Nachbearbeitungsanordnung gibt es ein einzelnes oder mehrere unabhängige Nachbearbeitungsgeräte. Als Nachbearbeitungsgeräte werden Geräte zum Aufbringen von Farbe oder zur Oberflächenbearbeitung durch Schleifmittel genannt. Das oder die Nachbearbeitungsgeräte und der 3D-Drucker stehen mit einer Kommunikationseinheit in Verbindung, die die 3D-Objektinformationen zur Steuerung des 3D-Druckers an diesen sendet und Nachbearbeitungsinformationen an das oder die Nachbearbeitungsgeräte sendet, die dann die Nachbearbeitungsoperationen auf Grundlage dieser Informationen automatisch durchführen. Im Falle mehrerer Nachbearbeitungsgeräte wird der nachzubearbeitende Formkörper manuell zwischen den Nachbearbeitungsgeräten transportiert oder automatisch durch eine automatische Transporteinrichtung. Die Nachbearbeitungsvorgänge der Reinigung durch flüssiges Reinigungsmittel und der Nachvergütung durch Nachbelichtung sind in dem Dokument nicht erwähnt.

US 5248456 A offenbart eine Nachbearbeitungsanordnung gemäß dem Oberbegriff des Anspruchs 1.

Es ist Aufgabe der vorliegenden Erfindung, eine Nachbearbeitungsanordnung für generativ durch Photopolymerisation aufgebaute Formkörper, die für die Nachbearbeitungsschritte der Reinigung des Formkörpers in einem flüssigen Reinigungsmittel und der Nachvergütung durch Nachbelichtung eingerichtet ist, so auszugestalten, dass sie einen kompakten, platzsparenden Aufbau hat und für den Benutzer bequem und sicher zur Durchführung der Nachbearbeitung betreibbar ist.

Zur Lösung dieser Aufgabe dient die Nachbearbeitungsanordnung mit den Merkmalen des Patentanspruchs 1. Vorteilhafte Ausführungsformen der Erfindung sind in den Unteransprüchen aufgeführt.

Erfindungsgemäß ist die Nachbearbeitungsanordnung so ausgestaltet, dass die Reinigungsstation und die Nachvergütungsstation in einem auf einer horizontalen Standfläche standfähigen Gehäuse untergebracht sind, in dem in einem unteren Abschnitt die Reinigungsstation und in einem vertikal darüber liegenden oberen Abschnitt die Nachvergütungsstation untergebracht sind. Der untere und der obere Abschnitt stehen durch einen Durchgang mit einem Verschluss, der geöffnet werden kann, miteinander in Verbindung. Durch die Nachvergütungsstation verläuft eine vertikale Hubeinrichtung mit einer vertikalen Führung und einer daran vertikal verfahrbaren Halterung, an der der Formkörper direkt oder indirekt befestigbar ist, um den Formkörper aus der Nachvergütungsstation in die Reinigungsstation und wieder zurück transportieren zu können. Eine in das Gehäuse integrierte Steuereinrichtung ist dazu eingerichtet, den Betrieb der Hubeinrichtung, des Verschlusses und der Reinigungs- und der Nachvergütungsstation so zu steuern, dass nach Positionieren des Formkörpers an der Halterung und nach Öffnen des Verschlusses die Hubeinrichtung den Formkörper in ein Becken der Reinigungsstation absenkt, den Betrieb der Reinigungsstation zur Reinigung des Formkörpers zu steuern, nach Abschluss des Betriebs der Reinigungsstation den Formkörper durch die Hubeinrichtung nach oben in die Nachvergütungsstation zu verfahren, den Verschluss des Durchgangs zu schließen und dann den Betrieb der Nachvergütungsstation zur Nachbelichtung zu steuern.

Die Integration der Reinigungsstation und der Nachvergütungsstation in vertikal übereinander liegender Beziehung in einem Gehäuse erlaubt einen besonders platzsparenden und kompakten Aufbau. Dabei ist die Unterbringung der Reinigungsstation unterhalb der darüber liegenden Nachvergütungsstation besonders vorteilhaft, da in einem solchen Aufbau der Formkörper durch die Hubeinrichtung von oben in das oben offene Becken abgesenkt werden kann, um dann die Reinigungsschritte durchzuführen. Nach Abschluss der Reinigungsschritte, wird der Formkörper durch die Steuereinrichtung durch Betreiben der Hubeinrichtung automatisch nach oben in die Nachbearbeitungsstation gefahren, wo die Steuereinrichtung nach Schließen des Verschlusses dann den Betrieb der Nachvergütungsstation zur Nachbelichtung des Formkörpers startet und steuert. Die vertikal übereinander liegende Anordnung von Reinigungsstation und Nachvergütungsstation in einem standfähigen Gehäuse ermöglicht es, die Nachbearbeitungsanordnung auf einer sehr geringen Stellfläche unterzubringen, so dass diese platzsparend aufgestellt werden kann.

Ferner muss ein Bediener den gebauten Formkörper nur einmal in Verbindung mit der Halterung an der Hubeinrichtung bringen, z.B. die Bauplattform mit einem oder mehreren Formkörpern mit der Halterung verbinden, wonach die Nachbearbeitungsschritte der Reinigung und der Nachbelichtung automatisch unter Steuerung der Steuereinrichtung ablaufen, so dass die Bedienungsperson in dieser Zeit nicht mehr eingreifen muss und nicht mehr mit dem Formkörper in Kontakt kommt und sich somit während dieser Zeit anderen Aufgaben zuwenden kann.

In einer bevorzugten Ausführungsform ist die Hubeinrichtung mit einem Drehantrieb versehen. Die Halterung ist mit dem Drehantrieb verbunden und derart ausgestaltet, dass der Formkörper durch den Drehantrieb in Rotation um eine vertikale Achse versetzbar ist, um den Formkörper durch Abschleudern von photopolymerisierbarer Flüssigkeit zu reinigen. Durch schnelle Rotation um die eigene vertikale Achse kann eine effektive, berührungsfreie Entfernung von Resten photopolymerisierbarer Flüssigkeit erfolgen. Dieser Reinigungsschritt erfolgt, nachdem die Steuereinrichtung die Hubeinrichtung dazu angesteuert hat, den Formkörper an der Halterung nach unten in das Becken der Reinigungsstation zu verfahren, woraufhin der Drehantrieb durch die Steuereinrichtung gestartet wird, um den Reinigungsschritt auszuführen. Die dabei abgeschleuderten Reste von photopolymerisierbarer Flüssigkeit werden in dem Becken aufgefangen und führen daher nicht zur Verunreinigung der Nachbearbeitungsanordnung.

In einer alternativen bevorzugten Ausführungsform ist die Reinigungsstation mit einer steuerbaren Zufuhr für Reinigungsflüssigkeit versehen. Die Steuereinrichtung ist dazu eingerichtet, nach Absenken des Formkörpers durch die Hubeinrichtung in das Becken den Betrieb der Reinigungsstation unter Füllung des Beckens mit Reinigungsflüssigkeit zur Reinigung des Formkörpers zu steuern. Die Reinigungswirkung kann dabei durch Magnetrührer intensiviert werden, die am Boden des Beckens in Rotation versetzt werden, um die Reinigungsflüssigkeit in Bewegung zu versetzen. Alternativ kann die Hubeinrichtung mit einem Drehantrieb versehen sein und die Halterung drehbar an der vertikalen Führung und mit dem Drehantrieb verbunden gelagert sein, so dass der Formkörper durch den Drehantrieb in Rotation versetzbar ist. Nach Absenken des Formkörpers durch die Hubeinrichtung in das Becken mit Reinigungsflüssigkeit kann die Steuereinrichtung den Drehantrieb starten, um so den Formkörper in der Reinigungsflüssigkeit in Drehung zu versetzen und dadurch die Reinigungswirkung zu intensivieren.

In einer vorteilhaften Ausführungsform ist die Nachbearbeitungsanordnung zum Anschluss von wenigstens zwei Behältern mit Reinigungsflüssigkeit ausgestaltet. Dazu können zum Beispiel im Bereich der Reinigungsstation Anschlussstutzen für Schläuche vorgesehen sein, die in Verbindung mit den Behältern mit Reinigungsflüssigkeit stehen. Ferner sind in der Nachbearbeitungsanordnung Pump- und Ventileinrichtungen vorgesehen, die unter Steuerung der Steuereinrichtung selektiv Reinigungsflüssigkeit aus einem bestimmten Behälter in das Becken der Reinigungsstation pumpen und nach Abschluss des Reinigungsschritts mit dieser Reinigungsflüssigkeit diese aus dem Becken herauspumpen, wobei die Reinigungsflüssigkeit dann in der Regel wieder in den Behälter zurückgepumpt wird, aus dem sie entnommen worden ist. Nach der Reinigung mit einer Reinigungsflüssigkeit kann die Steuereinrichtung nach Maßgabe eines darin gespeicherten Reinigungsprogramms durch Steuerung der Pump- und Ventileinrichtungen eine andere Reinigungsflüssigkeit aus einem anderen ausgewählten Behälter mit Reinigungsflüssigkeit in das Becken der Reinigungsstation pumpen, einen weiteren Reinigungsschritt durchführen und die Reinigungsflüssigkeit anschließend wieder abpumpen. So können z.B. eine grobe Vorreinigung und anschließend eine Feinreinigung durchgeführt werden. Um die Reinigungsflüssigkeit in Strömung zu versetzen und dadurch die Reinigunswirkung zu erhöhen, ist am Beckenboden ein Magnetrührer oder alternativ ein Ultraschallaktuator angeordnet.

Auf diese Weise ist es möglich, mehrere Reinigungsschritte mit verschiedenen Reinigungsflüssigkeiten (die Reinigungsflüssigkeiten können chemisch die gleiche Grundform haben, aber unterschiedliche Anteile von Verunreinigungen durch photopolymerisierbares Material aus vorhergehenden Reinigungen enthalten) in einem einzigen Becken durchzuführen, was wesentlich weniger Platz in Anspruch nimmt als die im Stand der Technik vorhandenen, nebeneinander stehenden Reinigungswannen mit den jeweiligen Reinigungsflüssigkeiten.

In einer vorteilhaften Ausführungsform ist die Nachvergütungsstation mit wenigstens zwei Lichtquellen zur Nachbelichtung des Formkörpers mit unterschiedlichen Wellenlängen versehen, vorzugsweise mit wenigstens vier Lichtquellen zur Nachbelichtung mit vier verschiedenen Wellenlängen. In einer vorteilhaften Ausführungsform sind die vier Lichtquellen so ausgewählt, dass ihre Wellenlängenmaxima in den Bereichen 360 - 370 nm, 380 - 390 nm, 400 - 410 nm und 455 - 465 nm liegen.

In einer vorteilhaften Ausführungsform ist die Steuereinrichtung mit einer Aufnahmeeinrichtung zur Aufnahme von Informationen über die Eigenschaften des nachzubearbeitenden Formkörpers verbunden. Die Steuereinrichtung hat ferner einen Speicher, in dem Betriebsprogramme für die Reinigungsstation und die Nachvergütungsstation in Abhängigkeit von Informationen zu den Eigenschaften des Formkörpers gespeichert sind. Die Steuereinrichtung ist dazu eingerichtet, nach Aufnahme der Informationen über die Eigenschaften des Formkörpers die zugehörigen Betriebsprogramme für die Reinigungsstation und die Nachvergütungsstation aufzurufen und die Reinigungsstation und die Nachvergütungsstation nach Maßgabe der aufgerufenen Betriebsprogramme zu steuern. Dabei kann die Aufnahmeeinrichtung eine manuelle Eingabeeinrichtung an der Nachbearbeitungsanordnung sein, die zur manuellen Eingabe von Informationen über die Eigenschaften des Formkörpers durch einen Benutzer ausgestaltet ist. Die Aufnahmeeinrichtung kann beispielsweise eine Tastatur oder einen Touchscreen umfassen.

Alternativ umfasst die Aufnahmeeinrichtung eine Leseeinrichtung, die zum Lesen eines mit der Bauplattform oder dem Formkörper verbundenen oder letzterem zugeordneten Datenträgers mit Informationen über die Eigenschaften des Formkörpers ausgestaltet ist. Beispielsweise ist der Datenträger ein mit der Bauplattform verbundener RFID-Transponder, der Informationen über den an der Bauplattform aufgebauten Formkörper enthält. Die Informationen über den Formkörper können dessen geometrische Eigenschaften, verwendete Baumaterialien und Bauparameter wie Belichtungsdauern etc. umfassen. Alternativ kann der Datenträger ein Strichcode oder DataMatrix-Code sein, der auf die Bauplattform aufgebracht oder in den Formkörper integriert ist und der von einem Lesegerät erfasst und der Nachbearbeitungsanordnung übermittelt wird, bevor die Bauplattform mit der Halterung der Hubeinrichtung verbunden wird.

In einer vorteilhaften Ausführungsform sind die Hubeinrichtung und ihre Halterung so ausgestaltet, dass ein Formkörper an der Halterung so gehalten wird, dass der Formkörper nach unten hängt und von allen Seiten und von unten frei zugänglich ist. Auf diese Weise kann die Hubeinrichtung den Formkörper in das Becken der Reinigungsstation absenken.

In einer bevorzugten Ausführungsform sind die Hubeinrichtung und ihre Halterung dazu ausgestaltet, dass eine Bauplattform mit dem oder den daran anhaftenden Formkörpern mit der Halterung verbindbar ist, so dass der Formkörper nach unten weisend an der Bauplattform hängt und unterhalb der Halterung frei zugänglich ist, d.h. es besteht wenigstens über die untere Hemisphäre unterhalb der Bauplattform freier Zugang zu den Formkörpern für die Strahlung der Nachvergütungsstation und die Reinigungsflüssigkeit der Reinigungsstation. In dieser Ausführungsform wird der Formkörper nach Abschluss des Bauvorgangs an der Bauplattform haftend mit dieser aus der Bauvorrichtung entnommen und dann mit der Bauplattform in die Nachbearbeitungsanordnung eingesetzt. Es vereinfacht die Handhabung bei der Nachbearbeitung, die Bauplattform mit den daran hängenden Formkörpern in die Nachbearbeitungsanordnung einzusetzen, ohne die Formteile im Vorfeld der Reinigung und Nachbelichtung von der Bauplattform entfernen zu müssen. Die Hubeinrichtung kann die Bauplattform soweit zum Becken hin absenken, dass auch der unterer Randbereich der Bauplattform mit Reinigungsflüssigkeit in Kontakt kommt. Dies hat den Vorteil, dass auch der Teil der Bauplattform, der mit unausgehärteter photopolymerisierbarer Flüssigkeit benetzt ist, automatisch mit gereinigt wird.

In einer bevorzugten Ausführungsform ist die Gehäuseeinheit aus unterem und oberem Abschnitt zylinderförmig, vorzugsweise kreiszylinderförmig, oder prismenförmig.

In einer bevorzugten Ausführungsform ist der obere Abschnitt des Gehäuses, in dem die Nachvergütungsstation untergebracht ist, in seiner Außenwand mit einer auf und zu klappbaren Klappe versehen, die nach Öffnung Zugriff auf den Innenraum der Belichtungsstation zum Beladen und Entnehmen eines nachzubearbeitenden Formkörpers, bzw. einer Bauplattform inklusive Formkörper ermöglicht.

In einer bevorzugten Ausführungsform sind der obere Abschnitt und der untere Abschnitt der Gehäuseeinheit lösbar miteinander verbunden. Das bedeutet, dass die Nachvergütungsstation im oberen Abschnitt und die Reinigungsstation im unteren Abschnitt jeweils als Module ausgebildet sein können, die vertikal übereinander liegend miteinander verbunden werden können und die jeweils eine Öffnung haben, die im verbundenen Zustand der oberen und unteren Abschnitte zueinander ausgerichtet den Durchgang zum vertikalen Transport des Formkörpers zwischen den Stationen bilden, der an der Halterung angebracht oder über die an der Halterung angebrachten Bauplattform mit der Halterung verbunden ist. Der Verschluss zum selektiven Öffnen und Schließen des Durchgangs ist dann an der Öffnung in der Oberwand des unteren Abschnitts angeordnet.

In einer bevorzugten Ausführungsform ist die Steuereinrichtung in einem lösbaren dritten Abschnitt des Gehäuses untergebracht. Dabei sind die voneinander lösbaren oberen und unteren Abschnitt und der dritte Abschnitt des Gehäuses so ausgestaltet, dass der dritte Abschnitt mit der Steuereinrichtung unter dem unteren Abschnitt an diesem anbringbar ist. Dabei sind elektrische Verbindungen vorhanden, die die Steuereinrichtung mit der Reinigungsstation und der Nachvergütungsstation verbinden. Auch der obere Abschnitt kann so ausgestaltet sein, dass auch der obere Abschnitt auf dem dritten Gehäuseabschnitt aufsetzbar ist, wenn der obere von dem unteren Abschnitt gelöst ist. In dieser Ausgestaltungsform ist es prinzipiell möglich, die Nachvergütungsstation und die Reinigungsstation auch als gesonderte Einheiten zu betreiben, falls in bestimmten Situationen ein gesonderter Betrieb vorteilhaft ist.

Die Erfindung wird im Folgenden anhand von Ausführungsbeispielen in den Zeichnungen beschrieben, in denen:
Fig. 1 und 2 schematische Querschnittansichten einer Nachvergütungsstation für die in Fig. 4 gezeigte Nachbearbeitungsstation zeigen,
Fig. 3 eine schematische Querschnittansicht einer Reinigungsstation für die in Fig. 4 gezeigte Nachbearbeitungsanordnung zeigt,
Fig. 4 eine schematische Querschnittansicht einer Ausführungsform der Nachbearbeitungsanordnung zeigt,
Fig. 5 eine Querschnittansicht der in Fig. 4 gezeigten Nachbearbeitungsanordnung zeigt, wobei voneinander lösbare Teile voneinander gelöst sind,
Fig. 6 Querschnittansichten der Nachbearbeitungsanordnung in drei verschiedenen Zuständen im Verlaufe eins Nachbearbeitungsvorgangs zeigt und
Fig. 7 eine schematische Querschnittansicht einer weiteren Ausführungsform der Nachbearbeitungsanordnung.

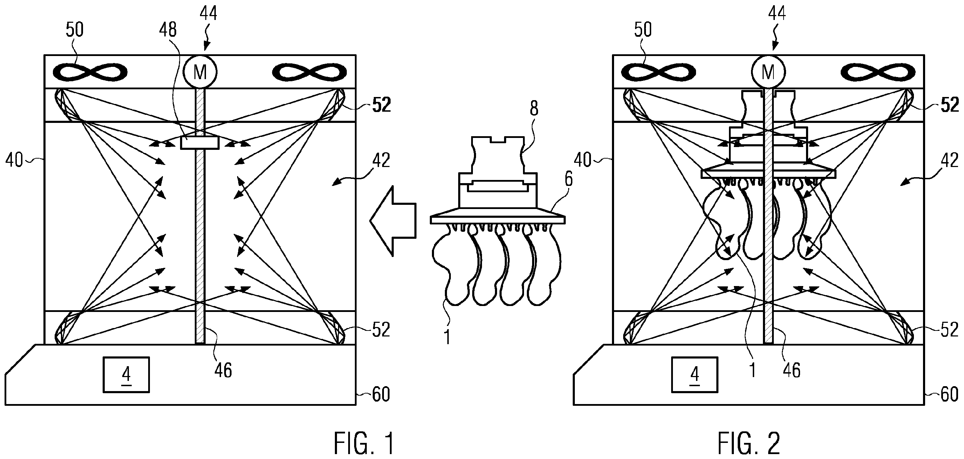

In den Fig. 1 und 2 ist die Nachvergütungsstation 42 zunächst zur Erläuterung gelöst von der Reinigungsstation der Nachbearbeitungsanordnung gezeigt, um deren Aufbau und Funktion zu illustrieren. Die Nachvergütungsstation 42 hat einen zylindrischen oberen Gehäuseabschnitt 40, in dem nahe dem oberen und dem unteren Ende umlaufende Reflektoren 52 angebracht sind, die Licht von um den Umfang herum verteilt angeordneten Lichtquellen in ein Belichtungsgebiet verteilt reflektieren. Durch die Form der Reflektoren 52 wird das Licht über einen weiten Bereich verteilt entlang einer zentralen Achse reflektiert. Die von den Reflektoren 52 verteilt reflektierten Lichtstrahlen der Lichtquellen sind in den Figuren 1 und 2 jeweils durch eine Schar von Pfeilen angedeutet. Es können mehrere Arten von Lichtquellen mit verschiedenen Emissionsmaxima um den Umfang herum verteilt sein, so dass Belichtungen mit gewünschten Wellenlängen durchgeführt werden können.

Rechts in Fig. 1 sind schematisch Formkörper 1, hier in Form von Dentalprothesen-Basen, dargestellt, die nach ihrem stereolithographischen Aufbau noch an einer Bauplattform 6 hängen, die eine den Formkörpern 1 gegenüberliegende obere Verlängerung 8 in Form von Stützstrukturen aufweist. Die Bauplattform 6 ist nach Beendigung des Bauvorgangs aus einer Stereolithographievorrichtung entnommen worden. Die Bauplattform wird mit den daran hängenden Formkörpern 1 durch eine Öffnung in der Außenwand des oberen Abschnitts 40 des Gehäuses, die durch eine Klappe geöffnet werden kann (nicht gezeigt) in das Innere der Nachvergütungsstation 42 eingebracht, wie schematisch durch den Pfeil in Fig. 1 angedeutet.

In der Nachvergütungsstation 42 befindet sich eine vertikale Hubeinrichtung 44. Diese verläuft mit einer vertikalen Führung 46, hier als Spindel angedeutet, durch den gesamten oberen Gehäuseabschnitt 40. Eine Halterung 48 greift mit der vertikalen Führung 46 ein und kann daran entlang in vertikaler Richtung verfahren werden. Die Bauplattform 6 ist dazu ausgestaltet, mit der Halterung 48 verbunden mit der vertikalen Führung 46 zusammenzuwirken, um so durch die Hubeinrichtung 44 in vertikaler Richtung verfahrbar zu sein.

Nachdem die Formkörper 1 mit der Bauplattform 6 an die Halterung und damit an die vertikale Führung 46 angesetzt worden sind, könnte bereits die Belichtung der Formkörper 1 zu ihrer Nachvergütung, wie in Fig. 2 gezeigt, durchgeführt werden. In einer Nachbearbeitungsstation nach der Erfindung wird jedoch nach Beladen der Nachvergütungsstation mit der Bauplattform 6 inkl. Formkörper 1 letztere in die Reinigungsstation 22 abgesenkt und zuerst dort gereinigt, wie weiter unten beschrieben wird.

Die Nachvergütungsstation 42 ist mit schematisch dargestellten Lüftern 50 versehen, die die Formkörper nach der Reinigung durch einen erzeugten Luftstrom trocknen und die Nachvergütungsstation 42 während der Nachbelichtung kühlen. Zudem wird durch die Lüfter gewährleistet, dass Lösungsmitteldämpfe aus der Nachvergütungsstation abgeführt werden, um eine mögliche Entzündung während der Nachbelichtung zu vermeiden.

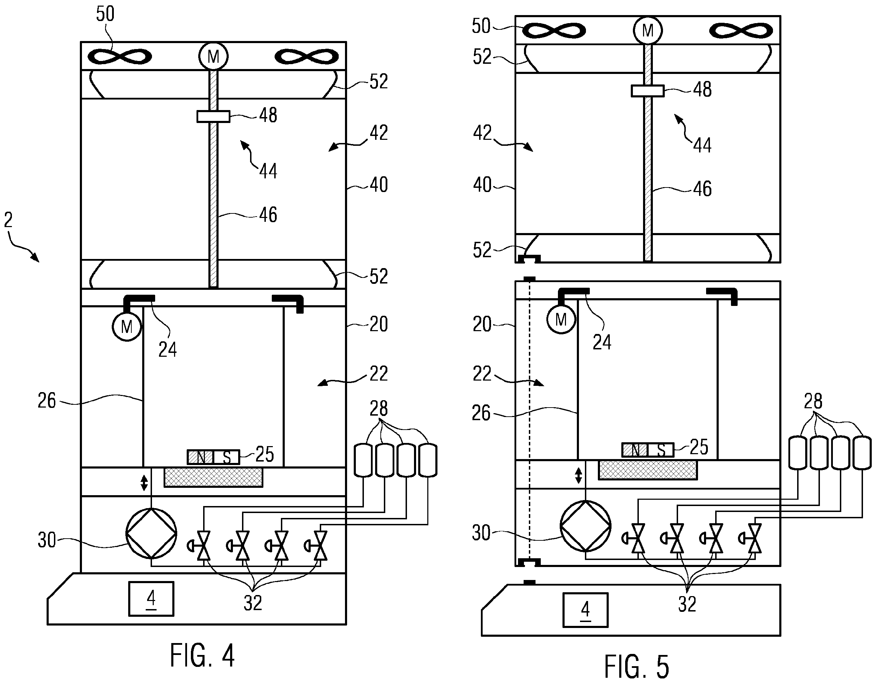

In den Fig. 1 und 2 ist der obere Gehäuseabschnitt auf einen dritten Gehäuseabschnitt 60 aufgesetzt gezeigt, in dem eine Steuereinrichtung 4 zur Steuerung der verschiedenen Komponenten der Nachbearbeitungsanordnung untergebracht ist. In dieser Konfiguration kann die Nachvergütungsstation 42 auch separat betrieben werden. In Fig. 5 ist eine elektrische Verbindung durch eine gestrichelte Leitung innerhalb der Reinigungsstation angedeutet, die die Verbindung der Nachvergütungsstation zur Steuereinrichtung 4 gewährleistet, wenn alle Module übereinander angeordnet und miteinander verbunden sind.

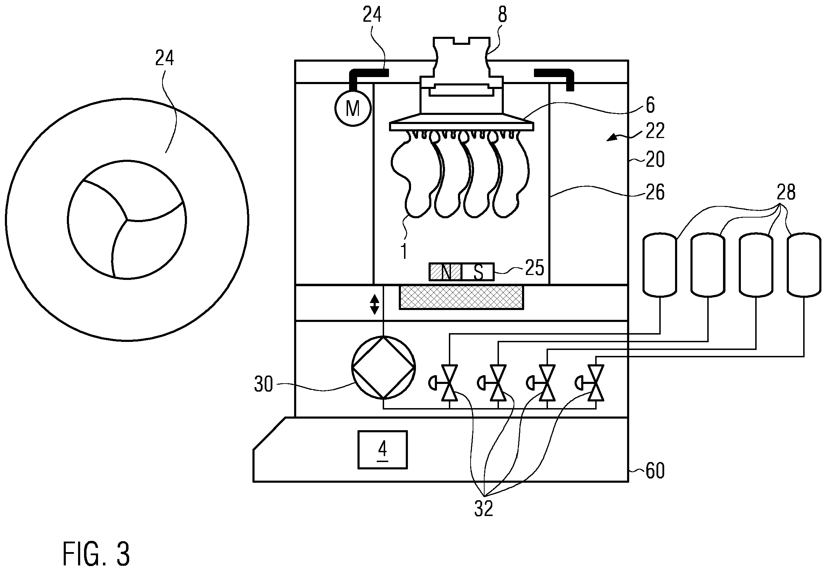

In Fig. 3 ist nun eine Reinigungsstation 22 zunächst isoliert aufgesetzt auf dem dritten Gehäuseabschnitt 60 gezeigt, um Aufbau und Funktion der Reinigungsstation 22 zu erläutern. Die Reinigungsstation 22 ist in einem unteren Gehäuseabschnitt 20 untergebracht, in dessen oberer Wand eine Öffnung mit einem Verschluss 24 vorhanden ist, der in Fig. 3 links in Draufsicht als Irisverschluss dargestellt ist. Der Verschluss 24 kann durch die Steuereinrichtung 4 geöffnet werden, wonach die Formkörper 1 an der Bauplattform 6, die von der Hubeinrichtung 44 durch die Halterung getragen wird, in die Reinigungsstation 22 abgesenkt werden. Die Bauplattform 6 ist dabei so ausgestaltet, dass sie an der Halterung 48 der Hubeinrichtung 44 hängend mit den Formkörpern 1 in die Reinigungsstation 22 hinein abgesenkt ist, wenn die Halterung 48 an der vertikalen Führung 46 nach unten in die maximal abgesenkte Stellung verfahren ist.

In der Reinigungsstation 22 im unteren Gehäuseabschnitt 20 ist ein oben offener Behälter oder Becken 26 angeordnet. Die Reinigungsstation 22 umfasst weiter eine Pumpe 30 und eine Reihe von damit in Verbindung stehenden Ventilen 32. An die Ventile 32 können externe Behälter 28 mit Reinigungsflüssigkeiten angeschlossen werden. Wenn sich die Formteile abgesenkt in der in Fig. 3 dargestellten Stellung im Innenraum des Beckens 26 befinden, pumpt die Pumpe 30 Reinigungsflüssigkeit aus einem ausgewählten der Behälter 28, der durch Öffnen des dem jeweiligen Behälter 28 zugeordneten Ventils 32 ausgewählt ist, in das Becken 26, das soweit gefüllt wird, dass die Formkörper 1 und der untere Teil der Bauplattform in die Reinigungsflüssigkeit eintauchen. Die Pumpe 30 und die Ventile 32 werden dabei durch die Steuereinrichtung 4 in dem dritten Gehäuseabschnitt 60 gesteuert.

Das Becken 26 ist ferner mit einem Magnetrührer 25 versehen, der die Reinigungsflüssigkeit in Bewegung versetzt, um den Reinigungsvorgang der Formkörper 1 mit der Reinigungsflüssigkeit zu intensivieren. Alternativ zum Magnetrührer kann auch ein Ultraschallaktuator an der Unterseite des Beckenbodens angeordnet sein.

Nach Abschluss eines Reinigungsschritts pumpt die Pumpe 30 die Reinigungsflüssigkeit wieder aus dem Becken 26 ab, wobei die Reinigungsflüssigkeit dabei in der Regel in denjenigen Behälter 28 zurückgepumpt wird, aus dem sie zuvor in das Becken 26 gepumpt worden ist. Dadurch kann die Reinigungsflüssigkeit wiederverwendet werden. In den Behältern 28 können Reinigungsflüssigkeiten verschiedener Art oder verschiedener Reinheit vorhanden sein, so dass aufeinanderfolgende Reinigungsschritte mit verschiedenen Reinigungsflüssigkeiten durch sukzessives Zupumpen der Reinigungsflüssigkeiten aus bestimmten Behältern 28 durchgeführt werden können. Beispielsweise kann zunächst eine Grobreinigung mit einer ersten Reinigungsflüssigkeit aus einem ersten der Behälter 28 durchgeführt werden und nach dem Abpumpen der Reinigungsflüssigkeit zur Grobreinigung eine Reinigungsflüssigkeit höherer Reinheit aus einem anderen der Behälter 28 in das Becken gepumpt werden, um eine Nachreinigung durchzuführen.

Die Fig. 4 und 5 zeigen nun die vollständige Nachbearbeitungsanordnung mit dem zuvor beschriebenen oberen Gehäuseabschnitt 40, unteren Gehäuseabschnitt 20 und dem dritten Gehäuseabschnitt 60, wobei Fig. 5 von Fig. 4 lediglich dadurch unterscheidet, dass die genannten Gehäuseabschnitte darin als voneinander lösbar dargestellt sind. In Fig. 5 ist eine elektrische Verbindung durch eine gestrichelte Leitung innerhalb der Reinigungsstation angedeutet, die die Verbindung der Nachvergütungsstation 42 zur Steuereinrichtung 4 gewährleistet, wenn alle Module übereinander angeordnet sind.

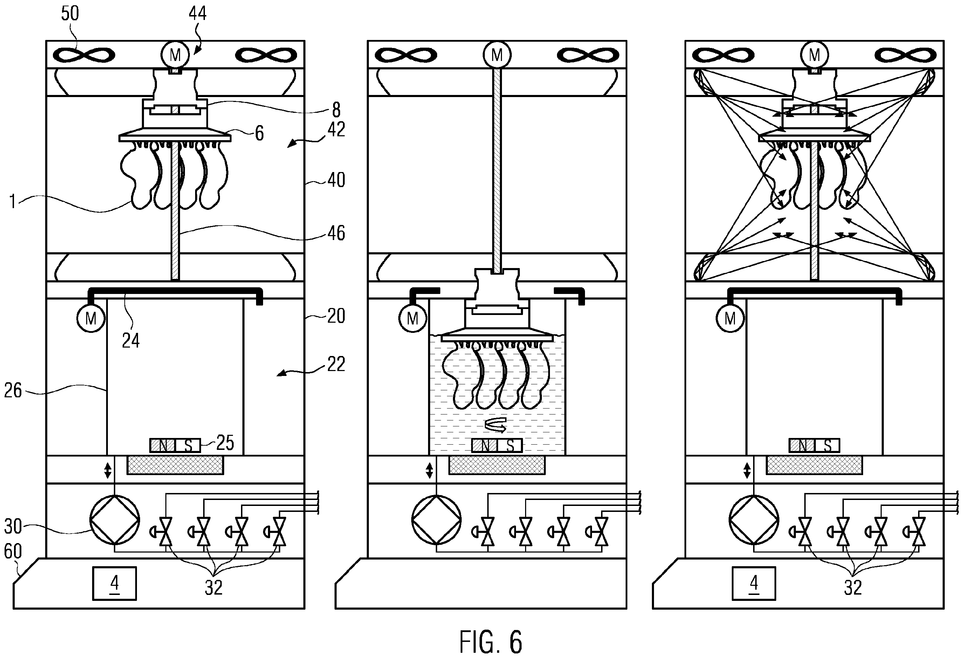

Fig. 6 zeigt die Nachbearbeitungsanordnung aus Fig. 4 in verschiedenen Zuständen während der Nachbearbeitung. In der linken Darstellung von Fig. 6 ist die Bauplattform 6 und den daran hängenden Formkörpern 1 in der Nachvergütungsstation 42 aufgehängt an der Halterung der vertikalen Hubeinrichtung 44 gezeigt, nachdem die Formkörper 1 mit ihrer Bauplattform nach ihrem Aufbau in einer Stereolithographievorrichtung so in die Nachvergütungsstation 42 im oberen Gehäuseabschnitt 40 eingesetzt worden sind. Die noch mit photopolymerisierbarem, unausgehärteten Material benetzten Formkörper 1 müssen dann zunächst einer Reinigung unterzogen werden. Dazu steuert die Steuereinrichtung 4 die Hubeinrichtung 44, so dass die Bauplattform 6 angesetzt an der Halterung nach unten verfahren wird. Dabei öffnet die Steuereinrichtung 4 den Verschluss 24, der eine Öffnung des Durchgangs zwischen dem oberen Gehäuseabschnitt 40 und dem unteren Gehäuseabschnitt 20 freigibt, so dass die Formkörper 1 an der Bauplattform 6 den Durchgang in die Reinigungsstation 22 im unteren Gehäuseabschnitt 20 passieren können. Wenn die Formkörper 1 ausreichend weit in das Becken 26 der Reinigungsstation 22 abgesenkt sind, wie in der Mitte in Fig. 6 gezeigt ist, beginnen die Reinigungsvorgänge durch das Zupumpen von Reinigungsflüssigkeiten wie oben mit Bezug auf Fig. 3 beschrieben worden ist.

Nach Abschluss von einem oder mehreren Reinigungsschritten mit einer oder mehreren Reinigungsflüssigkeiten und Abpumpen der letzten Reinigungsflüssigkeit aus dem Becken 26 steuert die Steuereinrichtung 4 die Hubeinrichtung 44, um die Formkörper 1 vertikal wieder nach oben in die Nachvergütungsstation 42 zu verfahren. Sobald die Formteile 1 sich wieder in der Nachvergütungsstation 42 befinden, kann der Verschluss 24 durch die Steuereinrichtung 4 wieder geschlossen werden. Anschließend kann, wie in Fig. 6 rechts gezeigt ist, dann die Nachbelichtung wie im Zusammenhang mit Fig. 1 und 2 beschrieben durchgeführt werden, indem die Steuereinrichtung 4 die gewünschten Lichtquellen mit der gewünschten Intensität über eine gewünschte Belichtungsdauer betreibt, um noch nicht vollständig ausgehärtete Zonen der Formkörper 1 voll auszupolymerisieren. Schließlich kann die Bauplattform 6 mit den daran hängenden Formkörpern 1 aus der Nachbearbeitungsanordnung entnommen werden, indem die Klappe (nicht gezeigt) in der Außenwand des oberen Gehäuseabschnitts 40 geöffnet und die Bauplattform 6 mit den Formkörpern 1 daran entnommen wird, womit die Nachbearbeitung der Formkörper 1 abgeschlossen ist.

Zwischen dem Einbringen der nachzubearbeitenden Formkörper 1 in die Nachbearbeitungsanordnung und der Entnahme der Formkörper 1 nach deren Nachbearbeitung, können alle oben beschriebenen Nachbearbeitungsschritte automatisch und gesteuert durch die Steuereinrichtung 4, die ein gespeichertes Betriebsprogramm ablaufen lässt, durchgeführt werden. Dadurch ist die Nachbearbeitung weniger personalintensiv und es bestehen keine Risiken, dass einzelne Schritte durch das Personal falsch oder ungenügend durchgeführt werden, da die Schritte nach vorgegebenen Programmen ablaufen.

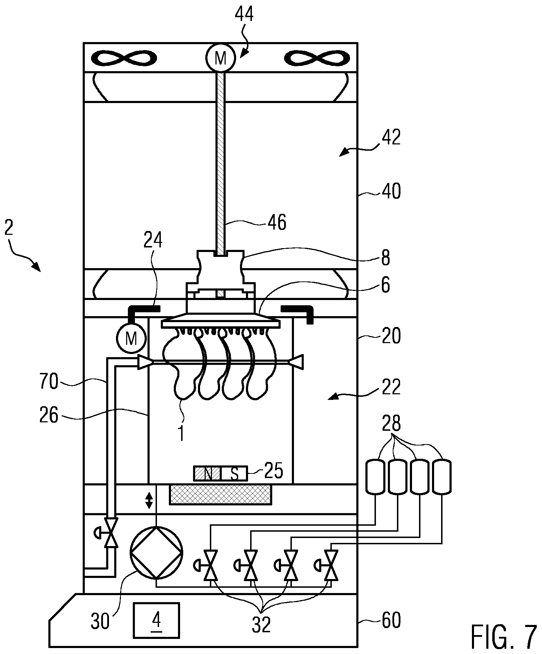

Die in Fig. 7 gezeigte Ausführungsform unterscheidet sich von der zuvor beschriebenen Nachbearbeitungsanordnung lediglich dadurch, dass in der Ausführungsform nach Fig. 7 weiter eine Druckluftleitung 70 vorhanden ist, die in eine Vielzahl von Düsen mündet. Die Druckluftleitung kann mit einer externen Druckluftquelle in Verbindung stehen. Die Steuereinrichtung 4 ist dazu eingerichtet, nach Abschluss des Reinigungsvorgangs die Formkörper 1 durch die Hubeinrichtung an den Düsen vertikal vorbei zu führen, um noch anhaftende Reinigungsflüssigkeit mittels Druckluft abzublasen und so den Reinigungs- und Trocknungsprozess des Formkörpers zu verbessern. In einer bevorzugten Ausführungsform kann auch nur eine Luftdüse vorhanden sein, die als Luftmesser (Airknife) ausgebildet ist, d.h. die Düsenöffnung ist als länglicher Düsenspalt geformt. Besonders bevorzugt ist dabei ein ringförmiges Luftmesser, bei dem der Düsenspalt ringförmig auf das Innere des ringförmigen Luftmessers gerichtet ist. Dadurch kann Luftströmung von allen Seiten auf den durch die ringförmige Öffnung des Luftmessers hindurch bewegten Formkörper gerichtet werden, um diesen besonders effektiv von restlicher Reinigungsflüssigkeit zu befreien und zu trocknen.

In einer weiteren Ausführungsform befindet sich in der Halterung zur Aufnahme der Bauplattform ein Drehantrieb, der die Bauplattform samt Formkörper um die vertikale Achse rotieren lassen kann, um überschüssiges, anhaftendes Reinigungsmittel abzuschleudern, anstatt durch Abblasen zu entfernen.

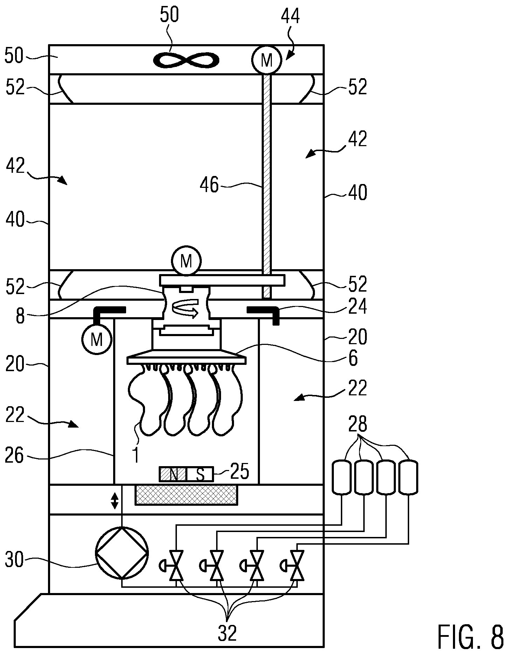

In Fig. 8 ist eine weitere Ausführungsform gezeigt, bei der die an der vertikalen Führung 46 vertikal verfahrbare Halterung mit einem Drehantrieb versehen ist, der die Bauplattform 6 mit den Formkörpern 1 daran in Rotation um die vertikale Achse versetzen kann. Durch die Drehung der Formkörper 1 gegen die im Becken 26 befindliche Reinigungsflüssigkeit (in Fig. 8 nicht gezeigt) kann die Reinigungswirkung durch die Relativbewegung der Reinigungsflüssigkeit zu den Formkörpern intensiviert werden. In einer solchen Ausführungsform mit einer rotierbaren Bauplattform ist der in Fig. 8 darüber hinaus dargestellte Magnetrührer 25 nicht unbedingt erforderlich. Er kann aber auch wie in Fig. 8 in Kombination mit dem Drehantrieb an der Halterung eingesetzt werden, um die Reinigungsflüssigkeit in eine entgegengesetzte Rotation zur Rotation der Bauplattform zu versetzen bzw. um die durch die Rotation der Bauplattform induzierte Drehung der Reinigungsflüssigkeit im Becken 26 zu bremsen oder umzukehren.

Die Art und Weise der durchzuführenden Reinigung und die Art und Weise der durchzuführenden Nachbelichtung kann von Eigenschaften der nachzubearbeitenden Formkörper abhängen. Beispielsweise kann sowohl die Auswahl der Wellenlängen und der Intensitäten der durchzuführenden Nachbelichtung von der Größe, der Form und der Materialart des Formkörpers und von der Art des Photopolymers abhängen, der zur Herstellung des Formkörpers verwendet worden ist. Ebenso können die vorzunehmenden Reinigungsschritte von Eigenschaften des im konkreten Fall nachzubearbeitenden Formkörpers abhängen. Aus diesen Gründen ist die Nachbearbeitungsanordnung vorteilhaft mit einer Aufnahmeeinrichtung zur Aufnahme von Informationen über die Eigenschaften des nachzubearbeitenden Formkörpers verbunden. Die Aufnahmeeinrichtung kann Teil der Nachbearbeitungsanordnung sein. Ferner ist die Steuereinrichtung mit gespeicherten Betriebsprogrammen für die Reinigungsstation und die Nachvergütungsstation versehen und dazu eingerichtet, in Abhängigkeit von den Informationen über die Eigenschaften des nachzubearbeitenden Formkörpers ein gespeichertes Betriebsprogramm für die Reinigungsstation und die Nachvergütungsstation auszuwählen, das zu den Eigenschaften des nachzubearbeitenden Formkörpers passt. Das nach den konkret nachzubearbeitenden Formkörpern nach Maßgabe der Informationen über dessen Eigenschaften ausgewählte Betriebsprogramm kann dann vollkommen automatisch in der von der Steuereinrichtung 4 gesteuerten Nachbearbeitungsanordnung ablaufen, ohne dass Personal eingreifen muss.

Die Aufnahmeeinrichtung für die Information über die Eigenschaften des Formkörpers kann eine manuelle Eingabeeinrichtung zur manuellen Eingabe der Informationen über die Eigenschaften des Formkörpers durch einen Benutzer sein. Alternativ kann eine automatische Leseeinrichtung als Aufnahmeeinrichtung dienen, die zum Lesen eines mit dem Formkörper verbundenen oder ihm zugeordneten Datenträgers mit den Informationen zu den Eigenschaften des Formkörpers eingerichtet ist. Beispielsweis kann ein Datenträger in Form eines Strichcodes oder DataMatrix-Codes an der von den Formkörpern 1 abgewandten Oberseite der Bauplattform 6 angebracht sein oder Teil des Formkörpers selbst sein und Informationen über die aufgebauten und daran hängenden Formkörper 1 enthalten, der von einem Code-Lesegerät als Aufnahmeeinrichtung ausgelesen werden kann, um die Informationen zu den Formkörpern 1 dann zur automatischen Auswahl eines dafür geeigneten Betriebsprogramms aus dem Speicher der Steuereinrichtung 4 zu verwenden und das ausgewählte Betriebsprogramm dann in der Nachbearbeitungsanordnung ablaufen zu lassen.

## Patentansprüche

1. Nachbearbeitungsanordnung für generativ durch Photopolymerisation aufgebaute Formkörper, die eine Reinigungsstation zur Reinigung des Formkörpers und eine Nachvergütungsstation zur Nachbelichtung des Formkörpers aufweist, **dadurch gekennzeichnet, dass** die Reinigungsstation und die Nachvergütungsstation in einem auf einer horizontalen Standfläche standfähigen Gehäuse (2) untergebracht sind, in dem in einem unteren Abschnitt (20) die Reinigungsstation (22) und in einem vertikal darüber liegenden oberen Abschnitt (40) die Nachvergütungsstation (42) untergebracht sind, wobei die unteren und oberen Abschnitte durch einen Durchgang mit einem Verschluss (24), der geöffnet werden kann, miteinander in Verbindung setzbar sind, dass durch die Nachvergütungsstation eine vertikale Hubeinrichtung (44) mit einer vertikalen Führung (46) und einer daran vertikal verfahrbaren Halterung (48) verläuft, an der der Formkörper (1) direkt oder indirekt befestigbar ist, um den Formkörper zwischen Reinigungsstation (22) und Nachvergütungsstation (42) hin und her transportieren zu können, dass eine in das Gehäuse integrierte Steuereinrichtung (4) dazu eingerichtet ist, den Betrieb der Hubeinrichtung (44), des Verschlusses (24) und der Reinigungs- und der Nachvergütungsstation so zu steuern, dass nach Positionieren des Formkörpers (1) an der Halterung und Öffnen des Verschlusses (24) die Hubeinrichtung (44) den Formkörper in ein Becken (26) der Reinigungsstation (22) absenkt, den Betrieb der Reinigungsstation zur Reinigung des Formkörpers zu steuern, nach Abschluss des Betriebs der Reinigungsstation (22) den Formkörper (1) durch die Hubeinrichtung (44) nach oben in die Nachvergütungsstation (42) zu verfahren, den Verschluss (24) des Durchgangs zu schließen und dann den Betrieb der Nachvergütungsstation (24) zur Nachbelichtung zu steuern.

2. Nachbearbeitungsanordnung nach Anspruch 1, **dadurch gekennzeichnet, dass** die Hubeinrichtung (44) mit einem Drehantrieb versehen und die Halterung mit dem Drehantrieb verbunden und derart ausgestaltet ist, dass der Formkörper (1) durch den Drehantrieb in Rotation um eine vertikale Achse versetzber ist, um den Formkörper durch Abschleudern von photopolymerisierbarer Flüssigkeit zu reinigen.

3. Nachbearbeitungsanordnung nach Anspruch 1, **dadurch gekennzeichnet, dass** die Reinigungsstation (22) mit einer steuerbaren Zufuhr für Reinigungsflüssigkeit versehen ist und dass die Steuereinrichtung (4) dazu eingerichtet ist, den Betrieb der Reinigungsstation (22) unter Füllung des Beckens (26) mit Reinigungsflüssigkeit zur Reinigung des Formkörpers (1) zu steuern.

4. Nachbearbeitungsanordnung nach Anspruch 3, **dadurch gekennzeichnet, dass** die Hubeinrichtung (44) mit einem Drehantrieb versehen und die Halterung mit dem Drehantrieb verbunden und derart ausgestaltet ist, dass der Formkörper (1) durch den Drehantrieb in Rotation um eine vertikale Achse versetzber ist, und dass die Steuereinrichtung (4) dazu eingerichtet ist, den nach Füllung des Beckens (26) mit Reinigungsflüssigkeit, den Formkörper durch den Drehantrieb in der Reinigungsflüssigkeit in Drehung zu versetzen, um die Reinigungswirkung zu intensivieren.

5. Nachbearbeitungsanordnung nach Anspruch 3 oder 4, **dadurch gekennzeichnet, dass** die Nachbearbeitungsanordnung zum Anschluss von wenigstens zwei Behältern (28) mit Reinigungsflüssigkeit ausgestaltet ist und mit einer Pumpe (30) und Ventileinrichtungen (32) versehen ist, die unter Steuerung der Steuereinrichtung (4) selektiv Reinigungsflüssigkeit aus einem Behälter (28) in das Becken (6) pumpen und nach Abschluss der Reinigung aus dem Becken heraus pumpen.

6. Nachbearbeitungsanordnung nach einem der vorhergehenden Ansprüche, **dadurch gekennzeichnet, dass** die Nachvergütungsstation (42) mit wenigstes zwei Lichtquellen zur Nachbelichtung mit unterschiedlichen Wellenlängen versehen ist.

7. Nachbearbeitungsanordnung nach Anspruch 6, **dadurch gekennzeichnet, dass** die Nachvergütungsstation (42) mit wenigstens vier Lichtquellen zur Nachbelichtung des Formkörpers mit vier verschiedenen Wellenlängen versehen ist.

8. Nachbearbeitungsanordnung nach Anspruch 7, **dadurch gekennzeichnet, dass** in der Nachvergütungsstation (42) die Lichtquellen Licht mit Wellenlängenmaxima in den Bereichen 360 - 370 nm, 380 - 390 nm, 400 - 410 nm und 455 - 465 nm auf den Formkörper richten.

9. Nachbearbeitungsanordnung nach einem der vorhergehenden Ansprüche, **dadurch gekennzeichnet, dass** die Steuereinrichtung (4) mit einer Aufnahmeeinrichtung zur Aufnahme von Informationen über die Eigenschaften des nachzubearbeitenden Formkörpers verbunden ist und mit einem Speicher versehen ist, in dem Betriebsprogramme für die Reinigungsstation (22) und die Nachvergütungsstation (42) in Abhängigkeit von Informationen zu den Eigenschaften des Formkörpers gespeichert sind, und dass die Steuereinrichtung dazu eingerichtet ist, nach Aufnahme der Informationen über die Eigenschaften des Formkörpers die zugeordneten Betriebsprogramme aufzurufen und die Reinigungsstation (22) und die Nachvergütungsstation (42) nach Maßgabe der aufgerufenen Betriebsprogramme zu steuern.

10. Nachbearbeitungsanordnung nach Anspruch 9, **dadurch gekennzeichnet, dass** die Aufnahmeeinrichtung eine manuelle Eingabeeinrichtung zur manuellen Eingabe von Informationen über die Eigenschaften des Formkörpers durch einen Benutzer ist.

11. Nachbearbeitungsanordnung nach Anspruch 9, **dadurch gekennzeichnet, dass** die Aufnahmeeinrichtung eine automatische Leseeinrichtung umfasst, die zum Lesen eines mit dem Formkörper verbundenen oder ihm zugeordneten Datenträgers mit Informationen zu den Eigenschaften des Formkörpers ausgestaltet ist.

12. Nachbearbeitungsanordnung nach einem der vorhergehenden Ansprüche, **dadurch gekennzeichnet, dass** die Hubeinrichtung (44) und ihre Halterung (48) so ausgestaltet sind, dass ein Formkörper (1) so herab hängend gehalten wird, dass er wenigstens aus der gesamten unteren Hemisphäre für die Strahlung der Nachvergütungsstation und die Reinigungsflüssigkeit der Reinigungsstation frei zugänglich ist.

13. Nachbearbeitungsanordnung nach Anspruch 12, **dadurch gekennzeichnet, dass** die Hubeinrichtung (44) und ihre Halterung (48) dazu ausgestaltet sind, dass eine Bauplattform (6,8) mit dem daran anhaftenden Formkörper (1) an der Halterung anbringbar ist, wobei der Formkörper nach unten weisend an der Bauplattform (6, 8) hängt.

14. Nachbearbeitungsanordnung nach einem der vorhergehenden Ansprüche, **dadurch gekennzeichnet, dass** das Gehäuse (2) zylinder- oder prismenförmig ist.

15. Nachbearbeitungsanordnung nach einem der vorhergehenden Ansprüche, **dadurch gekennzeichnet, dass** der obere Abschnitt (40) des Gehäuses, in dem die Nachvergütungsstation (42) untergebracht ist, in seiner Außenwand eine zu öffnende Klappe aufweist, die bei Öffnung Zugriff auf den Innenraum der Nachvergütungsstation zum Verbinden eines nachzubearbeitenden Formkörpers mit der Halterung (48) der Hubeinrichtung (44) und zur Entnahme eines nachbearbeiteten Formkörpers daraus ermöglicht.

16. Nachbearbeitungsanordnung nach einem der vorhergehenden Ansprüche, **dadurch gekennzeichnet, dass** der obere Abschnitt (40) und der untere Abschnitt (20) des Gehäuses (2) lösbar miteinander verbunden sind.

17. Nachbearbeitungsanordnung nach Anspruch 15, **dadurch gekennzeichnet, dass** der obere Abschnitt (40) in seiner Unterwand eine Öffnung hat und der untere Abschnitt (20) in seiner Oberwand eine mit der Öffnung der Oberwand fluchtende Öffnung hat, wobei die Öffnungen zusammen den Durchgang bilden und der Verschluss (24) zum selektiven Öffnen und Schließen des Durchgangs an der Öffnung in der Oberwand des unteren Abschnitts angeordnet ist.

18. Nachbearbeitungsanordnung nach Anspruch 16 oder 17, **dadurch gekennzeichnet, dass** die Steuereinrichtung in einem lösbaren dritten Abschnitt (60) des Gehäuses untergebracht ist, wobei der untere Abschnitt (20) und der dritte Abschnitt des Gehäuses so ausgestaltet sind, dass der dritten Abschnitt (60) unter dem unteren Abschnitt (20) an diesem anbringbar ist und eine elektrische Verbindung zwischen der Steuereinrichtung (4) im dritten Abschnitt (60) und den unteren und oberen Abschnitten (20, 40) vorhanden ist.

## Claims

1. Post processing arrangement for shaped bodies manufactured additively by photopolymerization, which has a cleaning station for cleaning the shaped body and a finishing station for post-exposure of the shaped body, **characterized in that** the cleaning station and the finishing station are housed in a housing (2), capable of standing on a horizontal stand surface, in which housing the cleaning station (22) is housed in a lower section (20) and the finishing station (42) is housed in an upper section (40) lying vertically above the lower section, wherein the lower and upper sections can be connected to each other by a passage with a closure (24) which can be opened, **in that** a vertical lifting apparatus (44), having a vertical guide (46) and a holder (48) which is vertically displaceable thereon and to which the shaped body (1) can be directly or indirectly secured, extends through the finishing station in order to be able to transport the shaped body back and forth between cleaning station (22) and finishing station (42), **in that** a control apparatus (4) integrated into the housing is set up to control the operation of the lifting apparatus (44), of the closure (24) and of the cleaning and finishing stations such that, after the shaped body (1) has been positioned on the holder and after the closure (24) has been opened, the lifting apparatus (44) lowers the shaped body into a basin (26) of the cleaning station (22); to control the operation of the cleaning station for cleaning the shaped body; after completion of the operation of the cleaning station (22), to displace the shaped body (1) by means of the lifting apparatus (44) upwards into the finishing station (42); to close the closure (24) of the passage and then to control the operation of the finishing station (24) for the post-exposure.

2. Post processing arrangement according to claim 1, **characterized in that** the lifting apparatus (44) is provided with a rotary drive and the holder is connected to the rotary drive and designed such that the shaped body (1) can be set in rotation about a vertical axis by the rotary drive in order to clean the shaped body by centrifuging off photopolymerizable liquid.

3. Post processing arrangement according to claim 1, **characterized in that** the cleaning station (22) is provided with a controllable feed for cleaning liquid and **in that** the control apparatus (4) is set up to control the operation of the cleaning station (22), by filling the basin (26) with cleaning liquid for cleaning the shaped body (1).

4. Post processing arrangement according to claim 3, **characterized in that** the lifting apparatus (44) is provided with a rotary drive and the holder is connected to the rotary drive and designed such that the shaped body (1) can be set in rotation about a vertical axis by the rotary drive, and **in that** the control apparatus (4) is set up to set the shaped body in rotation in the cleaning liquid using the rotary drive, after the basin (26) has been filled with cleaning liquid, in order to intensify the cleaning action.

5. Post processing arrangement according to claim 3 or 4, **characterized in that** the post processing arrangement is designed for connection of at least two containers (28) with cleaning liquid and is provided with a pump (30) and valve apparatuses (32) which, under the control of the control apparatus (4), selectively pump cleaning liquid from a container (28) into the basin (6) and, after completion of the cleaning process, out of the basin.

6. Post processing arrangement according to one of the preceding claims, **characterized in that** the finishing station (42) is provided with at least two light sources for post-exposure with different wavelengths.

7. Post processing arrangement according to claim 6, **characterized in that** the finishing station (42) is provided with at least four light sources for the post-exposure of the shaped body with four different wavelengths.

8. Post processing arrangement according to claim 7, **characterized in that** in the finishing station (42) the light sources direct light with maximum wavelengths in the ranges 360 - 370 nm, 380 - 390 nm, 400 - 410 nm and 455 - 465 nm onto the shaped body.

9. Post processing arrangement according to one of the preceding claims, **characterized in that** the control apparatus (4) is connected to an input apparatus for receiving information about the properties of the shaped body to be finished and is provided with a memory, in which operating programs for the cleaning station (22) and the finishing station (42) in dependence on information on the properties of the shaped body are stored, and **in that** the control apparatus is set up to retrieve the associated operating programs after the information about the properties of the shaped body has been received, and to control the cleaning station (22) and the finishing station (42) as required by the retrieved operating programs.

10. Post processing arrangement according to claim 9, **characterized in that** the input apparatus is a manual input apparatus for the manual input of information about the properties of the shaped body by a user.

11. Post processing arrangement according to claim 9, **characterized in that** the input apparatus comprises an automatic reading apparatus which is designed to read a data storage medium connected to the shaped body or assigned to it with information on the properties of the shaped body.

12. Post processing arrangement according to one of the preceding claims, **characterized in that** the lifting apparatus (44) and its holder (48) are designed such that a shaped body (1) is held suspended downwards such that it is freely accessible for the radiation of the finishing station and the cleaning liquid of the cleaning station at least from the entire lower hemisphere.

13. Post processing arrangement according to claim 12, **characterized in that** the lifting apparatus (44) and its holder (48) are designed such that a construction platform (6, 8) with the shaped body (1) adhering thereto can be attached to the holder, wherein the shaped body is suspended on the construction platform (6, 8) pointing downwards.

14. Post processing arrangement according to one of the preceding claims, **characterized in that** the housing (2) has the shape of a cylinder or prism.

15. Post processing arrangement according to one of the preceding claims, **characterized in that** the upper section (40) of the housing, in which the finishing station (42) is housed, has in its outer wall a flap to be opened, which allows access, when opened, to the interior of the finishing station to connect a shaped body to be finished to the holder (48) of the lifting apparatus (44), and to remove a finished shaped body from it.

16. Post processing arrangement according to one of the preceding claims, **characterized in that** the upper section (40) and the lower section (20) of the housing (2) are detachably connected to each other.

17. Post processing arrangement according to claim 15, **characterized in that** in its bottom wall the upper section (40) has an opening and in its top wall the lower section (20) has an opening that is flush with the opening of the upper wall, wherein the openings together form the passage and the closure (24) is arranged at the opening in the upper wall of the lower section for the selective opening and closing of the passage.

18. Post processing arrangement according to claim 16 or 17, **characterized in that** the control apparatus is housed in a detachable third section (60) of the housing, wherein the lower section (20) and the third section of the housing are designed such that the third section (60) is attachable to the lower section (20) from below, and such that there is an electrical connection between the control apparatus (4) in the third section (60) and the lower and upper sections (20, 40).

## Revendications

1. Agencement de traitement ultérieur pour corps moulés fabriqués de manière additive par photopolymérisation, qui présente une station de nettoyage pour nettoyer le corps moulé et une station de finition pour l'exposition ultérieure d'un corps moulé, **caractérisé en ce que** la station de nettoyage et la station de finition sont logées dans un logement (2), capable de se tenir sur une surface de support horizontale, dans laquelle la station de nettoyage (22) est logée dans une section inférieure (20) et la station de finition (42) est logée dans une section supérieure (40) se trouvant à la verticale au-dessus de la section inférieure, dans lequel les sections inférieure et supérieure sont connectées l'une à l'autre par un passage avec une fermeture (24) qui peut être ouverte, **en ce qu'**un appareil de levage vertical (44), présentant un guide vertical (46) et un support (48) qui peut être déplacé verticalement sur celui-ci et auquel le corps moulé (1) peut être fixé directement ou indirectement, s'étend à travers la station de finition de façon à être capable de transporter le corps moulé d'avant en arrière entre une station de nettoyage (22) et une station de finition (42), **en ce qu'**un appareil de commande (4) intégré à l'intérieur du logement est configuré pour commander l'opération de l'appareil de levage (44), de la fermeture (24) et des stations de nettoyage et de finition de sorte que, après que le corps moulé (1) a été positionné sur le support et après que la fermeture (24) a été ouverte, l'appareil de levage (44) abaisse le corps moulé dans un bassin (26) de la station de nettoyage (22) ; la commande de l'opération de la station de nettoyage pour nettoyer le corps moulé ; après le terme de l'opération de la station de nettoyage (22), pour déplacer le corps moulé (1) vers le haut à l'intérieur de la station de finition (42) en utilisant l'appareil de levage (44) ; pour fermer la fermeture (24) du passage et pour ensuite commander l'opération de la station de finition (24) pour l'exposition ultérieure.

2. Agencement de traitement ultérieur selon la revendication 1, **caractérisé en ce que** l'appareil de levage (44) est doté d'un entraînement rotatif et le support est connecté à l'entraînement rotatif et conçu de sorte que le corps moulé (1) peut être réglé en rotation autour d'un axe vertical par l'entraînement rotatif de façon à nettoyer le corps moulé en supprimant le liquide photopolymérisable par centrifugation.

3. Agencement de traitement ultérieur selon la revendication 1, **caractérisé en ce que** la station de nettoyage (22) est dotée d'un flux pouvant être commandé pour du liquide de nettoyage et **en ce que** l'appareil de commande (4) est réglé pour commander l'opération de la station de nettoyage (22), en remplissant le bassin (26) avec du liquide de nettoyage pour nettoyer le corps moulé (1).

4. Agencement de traitement ultérieur selon la revendication 1, **caractérisé en ce que** l'appareil de levage (44) est doté d'un entraînement rotatif et le support est connecté à l'entraînement rotatif et conçu de sorte que le corps moulé (1) peut être réglé en rotation autour d'un axe vertical par l'entraînement rotatif, et **en ce que** l'appareil de commande (4) est réglé pour mettre le corps moulé en rotation dans le liquide de nettoyage en utilisant l'entraînement rotatif après que le bassin (26) ait été rempli avec du liquide de nettoyage de façon à intensifier l'action de nettoyage.

5. Agencement de traitement ultérieur selon la revendication 3 ou 4, **caractérisé en ce que** l'agencement de traitement ultérieur est conçu pour la connexion d'au moins deux conteneurs (28) avec du liquide de nettoyage et est doté d'une pompe (30) et des appareils de valve (32) qui, par la commande de l'appareil de commande (4), pompent de manière sélective du liquide de nettoyage à partir d'un conteneur (28) à l'intérieur de bassin (6) et, après le terme du nettoyage, en dehors du bassin.

6. Agencement de traitement ultérieur selon l'une quelconque des revendications précédentes, **caractérisé en ce que** la station de finition (42) est dotée d'au moins deux sources de lumière pour une exposition ultérieure à différentes longueurs d'onde.

7. Agencement de traitement ultérieur selon la revendication 6, **caractérisé en ce que** la station de finition (42) est dotée d'au moins quatre sources de lumière pour l'exposition ultérieure du corps moulé à quatre longueurs d'onde différentes.

8. Agencement de traitement ultérieur selon la revendication 7, **caractérisé en ce que** dans la station de finition (42) les sources de lumière dirigent de la lumière avec des longueurs d'onde maximales dans les plages de 360 à 370 nm, 380 à 390 nm, 400 à 410 nm et 455 à 465 nm sur le corps moulé.

9. Agencement de traitement ultérieur selon l'une quelconque des revendications précédentes, **caractérisé en ce que** l'appareil de commande (4) est connecté à un appareil de saisie pour recevoir des informations au sujet des propriétés du corps moulé à finir et est doté d'une mémoire, dans laquelle des programmes d'opération pour la station de nettoyage (22) et la station de finition (42) en tant que fonction des informations au sujet des propriétés du corps moulé sont stockées, et **en ce que** l'appareil de commande est réglé pour extraire les programmes d'opération associés après que les informations au sujet des propriétés du corps moulé ont été reçues, et pour commander la station de nettoyage (22) et la station de finition (42) de la manière requise par les programmes d'opération extraits.

10. Agencement de traitement ultérieur selon la revendication 9, **caractérisé en ce que** l'appareil de saisie est un appareil de saisie manuelle pour la saisie manuelle d'informations au sujet des propriétés du corps moulé par un utilisateur.

11. Agencement de traitement ultérieur selon la revendication 9, **caractérisé en ce que** l'appareil de saisie comprend un appareil de lecture automatique qui est conçu pour lire un support de stockage de données connecté au corps moulé ou assigné à celui-ci avec des informations au sujet des propriétés du corps moulé.

12. Agencement de traitement ultérieur selon l'une quelconque des revendications précédentes, **caractérisé en ce que** l'appareil de levage (44) et son support (48) sont conçus de sorte qu'un corps moulé (1) est maintenu en suspension vers le bas de sorte qu'il est accessible librement à la radiation de la station de finition et au liquide de nettoyage de la station de nettoyage au moins à partir de tout l'hémisphère inférieur.

13. Agencement de traitement ultérieur selon la revendication 12, **caractérisé en ce que** l'appareil de levage (44) et son support (48) sont conçus de façon à ce qu'une plateforme de construction (6, 8) à laquelle le corps moulé (1) adhère peut être attachée au support, dans lequel le corps moulé est suspendu sur la plateforme de construction (6, 8) en étant dirigé vers le bas.

14. Agencement de traitement ultérieur selon l'une quelconque des revendications précédentes, **caractérisé en ce que** le logement (2) a la forme d'un cylindre ou d'un prisme.

15. Agencement de traitement ultérieur selon l'une quelconque des revendications précédentes, **caractérisé en ce que** la section supérieure (40) du logement, dans laquelle la station de finition (42) est logée, présente en sa paroi externe un rabat à ouvrir, qui permet l'accès, lorsqu'il est ouvert, à l'intérieur de la station de finition pour connecter un corps moulé à finir au support (48) de l'appareil de levage (44) et pour retirer un corps moulé fini de celle-ci.

16. Agencement de traitement ultérieur selon l'une quelconque des revendications précédentes, **caractérisé en ce que** la section supérieure (40) et la section inférieure (20) du logement (2) peuvent être connectées de manière détachable l'une à l'autre.

17. Agencement de traitement ultérieur selon la revendication 15, **caractérisé en ce qu'**en sa paroi inférieure, la section supérieure (40) présente une ouverture et en sa paroi supérieure, la section inférieure (20) présente une ouverture qui est alignée avec l'ouverture de la paroi supérieure, dans lequel les ouvertures forment ensemble le passage et la fermeture (24) est agencée au niveau de l'ouverture dans la paroi supérieure de la section inférieure pour l'ouverture et la fermeture sélective du passage.

18. Agencement de traitement ultérieur selon la revendication 16 ou 17, **caractérisé en ce que** l'appareil de commande est logé dans une troisième section pouvant être détachée (60) du logement, dans lequel la section inférieure (20) et la troisième section du logement sont conçues de sorte que la troisième section (60) peut être attachée à la section inférieure (20) sous celle-ci, et de sorte qu'il y a une connexion électrique entre l'appareil de commande (4) dans la troisième section (60) et les sections inférieure et supérieure (20, 40).
